# EUROPEAN PATENT SPECIFICATION

(11) **EP 4 279 950 B1**
(45) Date of publication and mention of the grant of the patent: **26.08.2026**
(21) Application number: 23174211.5
(22) Date of filing: 19.05.2023
(51) Int. Cl.: G01S 7/497, G01S 17/931, G01S 7/48, G01S 17/42, G01S 17/87

(54) **FAULT DIAGNOSIS AND HANDLING METHOD FOR VEHICLE-MOUNTED LASER RADAR, APPARATUS, MEDIUM AND VEHICLE**
FEHLERDIAGNOSE- UND HANDHABUNGSVERFAHREN FÜR FAHRZEUGMONTIERTES LASERRADAR, VORRICHTUNG, MEDIUM UND FAHRZEUG
PROCÉDÉ DE DIAGNOSTIC ET DE GESTION DE DÉFAILLANCE POUR RADAR LASER MONTÉ SUR VÉHICULE, APPAREIL, SUPPORT ET VÉHICULE

(30) Priority: 19.05.2022 CN 202210558000
(43) Date of publication of application: 22.11.2023
(73) Proprietor: Anhui NIO Autonomous Driving Technology Co., Ltd., Hefei, Anhui 230601 (CN)
(72) Inventor: ZHOU, Jia, Jiading Shanghai (CN); LIU, Guoyi, Jiading Shanghai (CN); SHE, Xiaoli, Jiading Shanghai (CN); REN, Shaoqing, Jiading Shanghai (CN)
(74) Representative: Vossius & Partner Patentanwälte Rechtsanwälte mbB

(56) References cited:
- EP-B1- 3 438 777
- CN-A- 114 200 480
- DE-A1- 102019 121 340
- JP-A- 2015 081 877
- US-B2- 10 203 408

## Description

### Technical Field

The disclosure relates to the technical field of autonomous driving, and specifically provides a fault diagnosis and handling method for a vehicle-mounted lidar, an apparatus, a medium and a vehicle.

### Background Art

With the continuous development of autonomous driving technology, the related functions and user experience of autonomous driving have been greatly improved. Whether a vehicle-mounted lidar, which is a core component in the autonomous driving technology, can collect information about the surrounding environment immediately and accurately is crucial to the autonomous driving function. Therefore, there is a need to perform effective diagnosis and troubleshooting on the vehicle-mounted lidar.

In the prior art, instruments are mainly used to diagnose whether a fault exists in the vehicle-mounted lidar, and to repair the fault. This method can neither immediately feed back the problem of the vehicle-mounted lidar nor calibrate parameters of the vehicle-mounted lidar in real time.

Correspondingly, there is a need in the art for a new fault diagnosis and handling solution for the vehicle-mounted lidar to solve the above problems.

JP 2015-081877 A addresses the problem of how to provide a reverse travelling support system capable of preventing wheel-stop detection failure. As solution, it is suggested: A reverse travelling support system for supporting a reverse travelling of a dump truck as a carrier machine has a backward object detection unit. The backward object detection unit measures a distance from the dump truck as the carrier machine to an object positioned at the rear direction (wheel stop etc.). The backward object detection unit is disposed at the outside of a follower wheel of the dump truck as the carrier machine and at a position above the follower wheel of the dump truck.

DE 10 2019 121 340 A1 discloses a method for determining malfunction. The method includes receiving a 1D or 2D luminance image of a scene from a time-of-flight based 3D-camera. The luminance image includes one or more pixels representing intensities of background light received by an image sensor of the 3D-camera.

US 10,203,408 B2 discloses s system for vehicular detection and ranging fault detection, notification, and recovery.

CN 114 200 480 A discloses a sensor error measurement method and system applied to a mobile robot. The sensor error measurement method comprises the following steps that first point cloud data collected by a first sensor and second point cloud data collected by a second sensor are obtained; the first point cloud data and the second point cloud data comprise point cloud data corresponding to the same detection target; the first sensor is driven to rotate within a preset angle range; and by taking the detection direction of the second sensor as a reference, calculating the angular deviation of the detection direction of the first sensor relative to the reference according to the first point cloud data and the second point cloud data.

### Summary

In order to overcome the above defect, the disclosure is proposed to solve or at least partially solve the problem of how to immediately and accurately diagnose the fault existing in the vehicle-mounted lidar for real-time handling.

The subject-matter of the present invention is defined by the features of the independent claim. Further preferred embodiments are defined in the dependent claims. In a first aspect, the disclosure provides a computer implemented fault diagnosis and handling method for a vehicle-mounted lidar, the method including:
comparing real-time point cloud data of a first preset target that is collected by the vehicle-mounted lidar with standard point cloud data pre-stored for the first preset target;
determining whether a first type of fault exists in the vehicle-mounted lidar based on the comparison result;
obtaining a current scenario where a vehicle is located; and
determining whether, if the first type of fault exists, to process the first type of fault based on the current scenario where the vehicle is located.

According to the present invention, the comparing of real-time point cloud data of a first preset target that is collected by the vehicle-mounted lidar with standard point cloud data pre-stored for the first preset target includes:
comparing the real-time point cloud data with the standard point cloud data to obtain a similarity between the real-time point cloud data and the standard point cloud data; and
the determining of whether a first type of fault exists in the vehicle-mounted lidar based on the comparison result includes:
   determining that the first type of fault exists in the vehicle-mounted lidar when the similarity is less than a preset similarity threshold.

According to the present invention, the determining of whether, if the first type of fault exists, to handle the first type of fault based on the current scenario where the vehicle is located includes:
determining whether the current scenario where the vehicle is located is a preset scenario, where the preset scenario is a scenario where point cloud data is missing due to environmental factors;
sending fault alarm information to a vehicle-mounted device if it is determined that the current scenario where the vehicle is located is not the preset scenario; and
performing no further handling if it is determined that the current scenario where the vehicle is located is the preset scenario.

In a technical solution of the fault diagnosis and handling method for a vehicle-mounted lidar described above, the determining of whether, if the first type of fault exists, to handle the first type of fault based on the current scenario where the vehicle is located includes:
determining whether the current scenario where the vehicle is located is a preset scenario, where the preset scenario is a scenario where point cloud data is missing due to environmental factors;
determining a fault duration of the first type of fault if it is determined that the current scenario where the vehicle is located is not the preset scenario;
sending fault alarm information to a vehicle-mounted device if the fault duration exceeds a preset duration threshold;
performing no further handling if the fault duration does not exceed the preset duration threshold; and
performing no further handling if it is determined that the current scenario where the vehicle is located is the preset scenario.

In a technical solution of the fault diagnosis and handling method for a vehicle-mounted lidar described above, the obtaining of a current scenario where a vehicle is located includes:
performing a real-time fusion on a real-time vehicle-side signal of the vehicle and real-time image data collected by a vehicle-mounted camera; and
obtaining the current scenario where the vehicle is located based on the real-time fusion result.

In a technical solution of the fault diagnosis and handling method for a vehicle-mounted lidar described above, the real-time vehicle-side signal includes at least one of a CAN signal, an RTK signal and an IMU signal on the vehicle side.

In a technical solution of the fault diagnosis and handling method for a vehicle-mounted lidar described above, the method further includes:
obtaining real-time point cloud data and real-time image data of a second preset target that are collected by the vehicle-mounted lidar and a vehicle-mounted camera respectively;
determining whether a second type of fault exists in the vehicle-mounted lidar by comparing the real-time point cloud data and the real-time image data; and
repairing the second type of fault if it is determined that the second type of fault exists in the vehicle-mounted lidar.

In a technical solution of the fault diagnosis and handling method for a vehicle-mounted lidar described above, the determining of whether a second type of fault exists in the vehicle-mounted lidar by comparing the real-time point cloud data and the real-time image data includes:
obtaining first position information of the second preset target based on the real-time point cloud data;
obtaining second position information of the second preset target based on the real-time image data;
comparing the first position information with the second position information based on an extrinsic parameter between the vehicle-mounted lidar and the vehicle-mounted camera, to obtain a positional deviation between the first position information and the second position information; and
determining that the second type of fault exists in the vehicle-mounted lidar if the positional deviation is greater than a preset deviation threshold.

In a technical solution of the fault diagnosis and handling method for a vehicle-mounted lidar described above, the repairing of the second type of fault if it is determined that the second type of fault exists in the vehicle-mounted lidar includes:
step S1: performing a real-time vehicle-side calibration on an extrinsic parameter between the vehicle-mounted lidar and the vehicle-mounted camera based on the real-time point cloud data and the real-time image data;
step S2: determining whether the real-time vehicle-side calibration is successfully performed on the extrinsic parameter; and if yes, proceeding to step S3; otherwise, proceeding to step S4;
step S3: completing the repair of the second type of fault;
step S4: determining whether the number of real-time vehicle-side calibrations is greater than a preset number threshold; and if yes, proceeding to step S5; otherwise, proceeding to step S 1; and
step S5: controlling a cloud server, which is communicatively connected to the vehicle, to issue an updated calibration file to the vehicle to complete the repair of the second type of fault, where the updated calibration file includes an accurate intrinsic parameter of the vehicle-mounted lidar and an accurate extrinsic parameter between the vehicle-mounted lidar and the vehicle-mounted camera.

In a second aspect, a control apparatus is provided, including a processor and a storage adapted to store a plurality of program codes, where the program codes are adapted to be loaded and run by the processor to perform the fault diagnosis and handling method for a vehicle-mounted lidar in any one of the technical solutions of the fault diagnosis and handling method for a vehicle-mounted lidar.

In a third aspect, a computer-readable storage medium is provided, in which a plurality of program codes are stored, where the program codes are adapted to be loaded and run by a processor to perform the fault diagnosis and handling method for a vehicle-mounted lidar in any one of the technical solutions of the fault diagnosis and handling method for a vehicle-mounted lidar.

In a fourth aspect, a vehicle is provided, including the control apparatus in the technical solutions of the control apparatus.

The above one or more technical solutions of the disclosure have at least one or more of the following beneficial effects:
During implementation of the technical solutions of the disclosure, it is possible in the disclosure to compare real-time point cloud data of a first preset target that is collected by the vehicle-mounted lidar with standard point cloud data pre-stored for the first preset target, to determine whether a first type of fault exists in the vehicle-mounted lidar based on the comparison result, and to determine whether to handle the first type of fault based on a current scenario where the vehicle is located. With the above configuration, the disclosure can diagnose, in real time, whether a first type of fault exists in the vehicle-mounted lidar, and determine whether to handle the first type of fault in view of the current scenario where the vehicle is located, so that it is possible to realize timely and accurate diagnosis and effective handling of the vehicle-mounted lidar, so that the effective diagnosis and troubleshooting of the vehicle-mounted lidar can be ensured, further ensuring the function of autonomous driving, and improving the user experience.

Solution 1. A fault diagnosis and handling method for a vehicle-mounted lidar, the method including:
comparing real-time point cloud data of a first preset target that is collected by the vehicle-mounted lidar with standard point cloud data pre-stored for the first preset target;
determining whether a first type of fault exists in the vehicle-mounted lidar based on the comparison result;
obtaining a current scenario where a vehicle is located; and
determining whether, if the first type of fault exists, to handle the first type of fault based on the current scenario where the vehicle is located.

The comparing of real-time point cloud data of a first preset target that is collected by the vehicle-mounted lidar with standard point cloud data pre-stored for the first preset target includes:
comparing the real-time point cloud data with the standard point cloud data to obtain a similarity between the real-time point cloud data and the standard point cloud data; and
the determining of whether a first type of fault exists in the vehicle-mounted lidar based on the comparison result includes:
   determining that the first type of fault exists in the vehicle-mounted lidar when the similarity is less than a preset similarity threshold.

The determining of whether, if the first type of fault exists, to handle the first type of fault based on the current scenario where the vehicle is located includes:
determining whether the current scenario where the vehicle is located is a preset scenario, where the preset scenario is a scenario where point cloud data is missing due to environmental factors;
sending fault alarm information to a vehicle-mounted device if it is determined that the current scenario where the vehicle is located is not the preset scenario; and
performing no further handling if it is determined that the current scenario where the vehicle is located is the preset scenario.

Solution 2. The method according to solution, where the determining of whether, if the first type of fault exists, to handle the first type of fault based on the current scenario where the vehicle is located includes:
determining whether the current scenario where the vehicle is located is a preset scenario, where the preset scenario is a scenario where point cloud data is missing due to environmental factors;
determining a fault duration of the first type of fault if it is determined that the current scenario where the vehicle is located is not the preset scenario;
sending fault alarm information to a vehicle-mounted device if the fault duration exceeds a preset duration threshold;
performing no further handling if the fault duration does not exceed the preset duration threshold; and
performing no further handling if it is determined that the current scenario where the vehicle is located is the preset scenario.

Solution 3. The method according to solution 1, where the obtaining of a current scenario where a vehicle is located includes:
performing a real-time fusion on a real-time vehicle-side signal of the vehicle and real-time image data collected by a vehicle-mounted camera; and
obtaining the current scenario where the vehicle is located based on the real-time fusion result.

Solution 4. The method according to solution 3, where the real-time vehicle-side signal includes at least one of a CAN signal, an RTK signal and an IMU signal on the vehicle side.

Solution 5. The method according to solution 1, further including:
obtaining real-time point cloud data and real-time image data of a second preset target that are collected by the vehicle-mounted lidar and a vehicle-mounted camera respectively;
determining whether a second type of fault exists in the vehicle-mounted lidar by comparing the real-time point cloud data and the real-time image data; and
repairing the second type of fault if it is determined that the second type of fault exists in the vehicle-mounted lidar.

Solution 6. The method according to solution 5, where the determining of whether a second type of fault exists in the vehicle-mounted lidar by comparing the real-time point cloud data and the real-time image data includes:
obtaining first position information of the second preset target based on the real-time point cloud data;
obtaining second position information of the second preset target based on the real-time image data;
comparing the first position information with the second position information based on an extrinsic parameter between the vehicle-mounted lidar and the vehicle-mounted camera, to obtain a positional deviation between the first position information and the second position information; and
determining that the second type of fault exists in the vehicle-mounted lidar if the positional deviation is greater than a preset deviation threshold.

Solution 7. The method according to solution 5, where the repairing of the second type of fault if it is determined that the second type of fault exists in the vehicle-mounted lidar includes:
step S1: performing a real-time vehicle-side calibration on an extrinsic parameter between the vehicle-mounted lidar and the vehicle-mounted camera based on the real-time point cloud data and the real-time image data;
step S2: determining whether the real-time vehicle-side calibration is successfully performed on the extrinsic parameter; and if yes, proceeding to step S3; otherwise, proceeding to step S4;
step S3: completing the repair of the second type of fault;
step S4: determining whether the number of real-time vehicle-side calibrations is greater than a preset number threshold; and if yes, proceeding to step S5; otherwise, proceeding to step S1; and
step S5: controlling a cloud server, which is communicatively connected to the vehicle, to issue an updated calibration file to the vehicle to complete the repair of the second type of fault, where the updated calibration file includes an accurate intrinsic parameter of the vehicle-mounted lidar and an accurate extrinsic parameter between the vehicle-mounted lidar and the vehicle-mounted camera.

Solution 8. A control apparatus, including a processor and a storage adapted to store a plurality of program codes, where the program codes are adapted to be loaded and run by the processor to perform the fault diagnosis and handling method for a vehicle-mounted lidar of any one of solutions 1 to 7.

Solution 9. A computer-readable storage medium having a plurality of program codes stored therein, where the program codes are adapted to be loaded and run by the processor to perform the fault diagnosis and handling method for a vehicle-mounted lidar of any one of solutions 1 to 7.

Solution 10. A vehicle, including the control apparatus according to solution 8.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic flowchart of main steps of a fault diagnosis and handling method for a vehicle-mounted lidar according to an embodiment of the disclosure;
FIG. 2 is a schematic flowchart of main steps of a diagnosis and handling method for a second type of fault of a vehicle-mounted lidar according to an implementation of embodiments of the disclosure;
FIG. 3 is a schematic flowchart of main steps of a fault diagnosis and handling method for a vehicle-mounted lidar according to an implementation of embodiments of the disclosure; and
FIG. 4 is a block diagram of a main system structure of a system for implementing a fault diagnosis and handling method for a vehicle-mounted lidar according to an implementation of embodiments of the disclosure.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that may store program codes, such as a magnetic disk, a hard disk, an optical disc, a flash memory, a read-only memory, or a random access memory. The term "A and/or B" indicates all possible combinations of A and B, such as only A, only B, or A and B. The term "at least one of A or B" or "at least one of A and B" has a meaning similar to "A and/or B" and may include only A, only B, or A and B. The terms "a/an" and "this" in the singular form may also include the plural form.

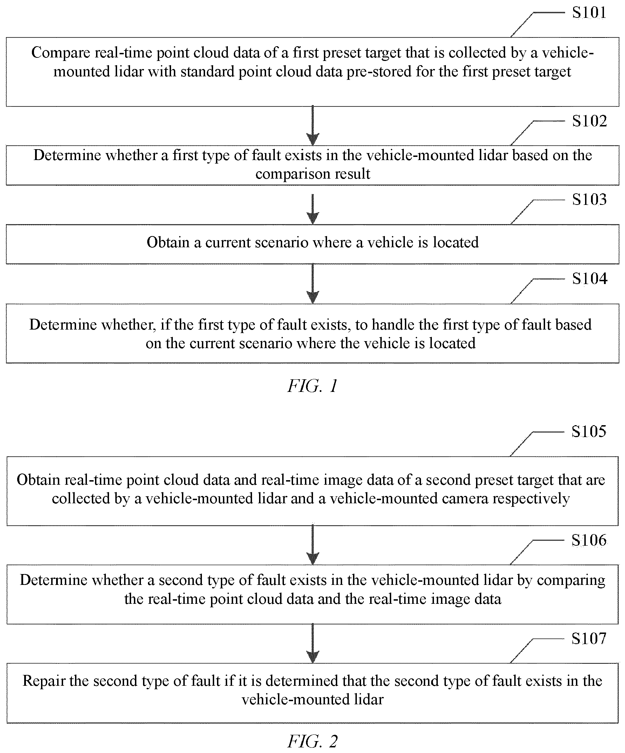

Referring to FIG. 1, FIG. 1 is a schematic flowchart of main steps of a fault diagnosis and handling method for a vehicle-mounted lidar according to an embodiment of the disclosure. As shown in FIG. 1, the fault diagnosis and handling method for a vehicle-mounted lidar in the embodiment of the disclosure mainly includes steps S101 to S104 below.

In step S101, real-time point cloud data of a first preset target that is collected by the vehicle-mounted lidar is compared with standard point cloud data pre-stored for the first preset target.

In this embodiment, it is possible to set a first preset target, and to compare the real-time point cloud data of the first preset target that is collected by the vehicle-mounted lidar with the standard point cloud data pre-stored on the vehicle side for the first preset target.

In an implementation, the first preset target may be a relatively common target in a vehicle driving scenario, such as a vehicle with a relatively common model (such as a three-box five-seater sedan).

In step S102, it is determined whether a first type of fault exists in the vehicle-mounted lidar based on the comparison result.

In this embodiment, it is possible to determine whether the first type of fault exists in the vehicle-mounted lidar based on the comparison result between the real-time point cloud data and the standard point cloud data.

In an implementation, the first type of fault may be that the vehicle-mounted lidar is blocked or the real-time point cloud data collected by the vehicle-mounted lidar has noise, resulting in inaccurate or incomplete real-time point cloud data collected by the vehicle-mounted lidar.

In step S103, a current scenario where a vehicle is located is obtained.

In this embodiment, it is possible to further obtain the current scenario where the vehicle is located.

In an implementation, the current scenario where the vehicle is located may be a scenario distinguished by weather, such as a rainy and snowy scenario, a foggy scenario, and a sunny scenario; or may be a scenario distinguished by time, such as a daytime scenario and a night scenario; or may be a scenario distinguished based on the location, such as a tunnel scenario, a basement scenario and an ordinary road scenario.

In step S104, it is determined whether, if the first type of fault exists, to handle the first type of fault based on the current scenario where the vehicle is located.

In this embodiment, it is possible to determine whether, if it is determined that the first type of fault exists in the vehicle-mounted lidar, to handle the first type of fault based on the current scenario where the vehicle is located. That is, a comprehensive determination is made on the first type of fault in view of the scenario, so as to decide whether to handle the first type of fault.

Based on steps S101 to S104 described above, it is possible in the embodiments of the disclosure to compare real-time point cloud data of a first preset target that is collected by the vehicle-mounted lidar with standard point cloud data pre-stored for the first preset target, to determine whether a first type of fault exists in the vehicle-mounted lidar based on the comparison result, and to determine whether to handle the first type of fault based on a current scenario where the vehicle is located. With the above configuration, the embodiments of the disclosure can diagnose, in real time, whether a first type of fault exists in the vehicle-mounted lidar, and determine whether to handle the first type of fault in view of the current scenario where the vehicle is located, so that it is possible to realize timely and accurate diagnosis and effective handling of the vehicle-mounted lidar, so that the effective diagnosis and troubleshooting of the vehicle-mounted lidar can be ensured, further ensuring the function of autonomous driving, and improving the user experience.

Step S101 to S 104 will be further described below.

In an implementation of the embodiments of the disclosure, step S101 may further include a step of
comparing the real-time point cloud data with the standard point cloud data to obtain a similarity between the real-time point cloud data and the standard point cloud data.

In this implementation, it is possible to compare the real-time point cloud data of the first preset target with the standard point cloud data to obtain a similarity between the real-time point cloud data and the standard point cloud data.

In an implementation, an ICP (Iterative Closest Point) algorithm may be used to obtain the similarity between the real-time point cloud data and the standard point cloud data. An NDT (Normal Distributions Transform) algorithm may also be used to obtain the similarity between the real-time point cloud data and the standard point cloud data.

In an implementation of the embodiments of the disclosure, step S102 may further include a step of
determining that the first type of fault exists in the vehicle-mounted lidar when the similarity is less than a preset similarity threshold.

In this implementation, it is possible to compare the obtained similarity between the real-time point cloud data and the standard point cloud data with a preset similarity threshold. When the similarity is less than the similarity threshold, it is determined that the first type of fault exists in the vehicle-mounted lidar.

Specifically, since the real-time point cloud data collected by the vehicle-mounted lidar and the standard point cloud data are point cloud data of the same type of target, the real-time point cloud data and the standard point cloud data should have a high degree of similarity when the vehicle-mounted lidar operates normally and the environmental factors of the current scenario where the vehicle is located will not cause the missing of point cloud data. When the similarity between the real-time point cloud data and the standard point cloud data is less than the similarity threshold, it can be considered that the vehicle-mounted lidar has the first type of fault or the environmental factors of the current scenario where the vehicle is located will cause the missing of point cloud data. Those skilled in the art may set the value of the similarity threshold based on requirements of a practical application.

In an implementation of the embodiments of the disclosure, step S103 may further include steps S1031 and S1032 below.

In step S1031, a real-time vehicle-side signal of the vehicle is fused in real time with real-time image data collected by a vehicle-mounted camera.

In step S1032, the current scenario where the vehicle is located is obtained based on the real-time fusion result.

In this implementation, it is possible to perform the real-time fusion on the real-time vehicle-side signal of the vehicle and the real-time image data collected by the vehicle-mounted camera; and to obtain the current scenario where the vehicle is located based on the real-time fusion result. That is, during the obtaining of the scenario of the vehicle, only the real-time vehicle-side signal and the real-time image data collected by the vehicle-mounted camera are used to obtain the current scenario where the vehicle is located, and the real-time point cloud data collected by the vehicle-mounted lidar is not used during the obtaining of the current scenario, to avoid errors in determining the current scenario where the vehicle is located when the vehicle-mounted lidar is faulty.

In an implementation, the real-time vehicle-side signal may include at least one of a CAN (Controller Area Network) signal, an RTK (Real-time kinematic) signal and an IMU (Inertial Measurement Unit) signal on the vehicle side.

In an implementation, it is possible to use a convolutional neural network-based model to perform feature extraction, then to use a region candidate network and a detection head to perform target detection to complete a perception algorithm, and finally to perform the real-time fusion on the real-time vehicle-side signal and the real-time image data collected by the vehicle-mounted camera.

In an implementation of the embodiments of the disclosure, step S 104 may further include steps S1041 and S 1043 below.

In step S 1041, it is determined whether the current scenario where the vehicle is located is a preset scenario. The preset scenario is a scenario where point cloud data is missing due to environmental factors.

In step S1042, fault alarm information is sent to a vehicle-mounted device if it is determined that the current scenario where the vehicle is located is not the preset scenario.

In step S 1043, no further handling is performed if it is determined that the current scenario where the vehicle is located is the preset scenario.

In this implementation, it is possible to determine whether the current scenario where the vehicle is located is a preset scenario, namely a scenario where point cloud data is missing due to environmental factors, such as a rainy and snowy scenario, a foggy scenario, a night scenario, a tunnel scenario, and a basement scenario. Due to the existence of obstruction, insufficient light or the like in the preset scenario, the real-time point cloud data collected by the lidar will be lost or have noise. If the current scenario where the vehicle is located is the preset scenario, it can be considered that the first type of fault existing in the vehicle-mounted lidar is caused by the preset scenario, and no further handling of the first type of fault is required. If the current scenario where the vehicle is located is not the preset scenario, it is considered that the first type of fault existing in the vehicle-mounted lidar is caused by the vehicle-mounted lidar itself, so it is necessary to send to the vehicle-mounted device fault alarm information such as voice fault alarm information, to display the fault alarm information on a dashboard of the vehicle or upload the fault alarm information to a cloud server or the like communicatively connected to the vehicle, to prompt a driver or corresponding after-sales personnel to perform corresponding handling, such as cleaning foreign objects in front of the vehicle-mounted lidar, or repairing the vehicle-mounted lidar.

In another implementation of the embodiment of the disclosure, step S 104 may further include steps S1044 and S 1048 below.

In step S 1044, it is determined whether the current scenario where the vehicle is located is a preset scenario. The preset scenario is a scenario where point cloud data is missing due to environmental factors.

In step S 1045, It is determined that a fault duration of the first type of fault if it is determined that the current scenario where the vehicle is located is not the preset scenario.

In step S1046, fault alarm information is sent to a vehicle-mounted device if the fault duration exceeds a preset duration threshold.

In step S 1047, no further handling is performed if the fault duration does not exceed the preset duration threshold.

In step S 1048, no further handling is performed if it is determined that the current scenario where the vehicle is located is the preset scenario.

In this implementation, after it is determined that the first type of fault exists in the vehicle-mounted lidar, whether to handle the first type of fault is comprehensively determined based on the current scenario where the vehicle is located and the fault duration of the first type of fault.

Specifically, when the current scenario where the vehicle is located is not the preset scenario and the fault duration is greater than the preset duration threshold, fault alarm information may be sent to the vehicle-mounted device. When the current scenario where the vehicle is located is not the preset scenario or the fault duration of the first type of fault is less than the preset duration threshold, the first type of fault is not handled. That is to say, after it is determined that the first type of fault exists in the vehicle-mounted lidar, the current scenario and the fault duration will be comprehensively taken into account. If the current scenario is a rainy and snowy scenario, a foggy scenario, a night scenario, a tunnel scenario, a basement scenario, etc., it may be considered that the first type of fault is caused by the preset scenario. Alternatively, when there are some temporary obstructions in front of the vehicle-mounted lidar causing the first type of fault, the first type of fault is not handled immediately, but after waiting for a preset duration threshold, if the obstructions still exist, the first type of fault is further handled.

In an implementation of the embodiments of the disclosure, referring to FIG. 2, FIG. 2 is a schematic flowchart of main steps of a diagnosis and handling method for a second type of fault of a vehicle-mounted lidar according to an implementation of the embodiments of the disclosure.

As shown in FIG. 2, the disclosure may include steps S105 to S 107 below in addition to steps S101 to S104 described above.

In step S105, real-time point cloud data and real-time image data of a second preset target that are collected by the vehicle-mounted lidar and a vehicle-mounted camera respectively are obtained.

In this implementation, it is possible to obtain the real-time point cloud data and the real-time image data of the same second preset target that are collected by the vehicle-mounted lidar and the vehicle-mounted camera. The second preset target may be the same target in the same target collection region of the vehicle-mounted lidar and the vehicle-mounted camera. A target with a distinct shape and outline in the same target collection region may be selected as the second preset target, such as a license plate of the vehicle and a signal light.

In step S106, it is determined whether a second type of fault exists in the vehicle-mounted lidar by comparing the real-time point cloud data and the real-time image data.

In this implementation, the second type of fault may be that the intrinsic and extrinsic parameters of the vehicle-mounted lidar are inaccurate. The intrinsic parameter refers to the conversion relationship between the coordinate system of a laser transmitter and the coordinate system of the vehicle-mounted lidar itself; and the extrinsic parameter refers to the conversion relationship between the coordinate system of the vehicle-mounted lidar itself and the coordinate system of the vehicle-mounted camera.

In an implementation, step S 106 may further include steps S 1061 to S 1064 below.

In step S1061, first position information of the second preset target is obtained based on the real-time point cloud data.

In step S1062, second position information of the second preset target is obtained based on the real-time image data.

In step S1063, the first position information is compared with the second position information based on an extrinsic parameter between the vehicle-mounted lidar and the vehicle-mounted camera, to obtain a positional deviation between the first position information and the second position information.

In step S 1064, it is determined that the second type of fault exists in the vehicle-mounted lidar if the positional deviation is greater than a preset deviation threshold.

In this implementation, it is possible to obtain the position coordinates of the second preset target in the coordinate system of the vehicle-mounted lidar itself (first position information) based on the real-time point cloud data. It is possible to obtain the position coordinates of the second preset target in the coordinate system of the vehicle-mounted camera (second position information) based on the real-time image data. According to the extrinsic parameter between the vehicle-mounted lidar and the vehicle-mounted camera, it is possible to convert the first position information into the coordinate system of the vehicle-mounted camera to obtain the position coordinates of the first position information in the coordinate system of the vehicle-mounted camera, and to compare the position coordinates of the first position information in the coordinate system of the vehicle-mounted camera with the second position information to obtain the positional deviation between the first position information and the second position information. If the positional deviation is greater than the preset deviation threshold, it may be considered that a second type of fault exists in the vehicle-mounted lidar, in other words, the intrinsic and extrinsic parameters of the vehicle-mounted lidar are inaccurate.

In step S107, the second type of fault is repaired if it is determined that the second type of fault exists in the vehicle-mounted lidar.

In this implementation, step S107 may further include steps S1071 to S 1075 below.

In step S1071, a real-time vehicle-side calibration is performed on an extrinsic parameter between the vehicle-mounted lidar and the vehicle-mounted camera based on the real-time point cloud data and the real-time image data.

In step S1072, it is determined whether the real-time vehicle-side calibration is successfully performed on the extrinsic parameter; and if yes, proceed to step S1073; otherwise, proceed to step S1074.

In step S1073, the repair of the second type of fault is completed.

In step S 1074, it is determined whether the number of real-time vehicle-side calibrations is greater than a preset number threshold; and if yes, proceed to step S1075; otherwise, proceed to step S1071.

In step S1075, a cloud server communicatively connected to the vehicle is controlled to issue an updated calibration file to the vehicle to complete the repair of the second type of fault. The updated calibration file includes an accurate intrinsic parameter of the vehicle-mounted lidar and an accurate extrinsic parameter between the vehicle-mounted lidar and the vehicle-mounted camera.

In this implementation, if it is determined that the second type of fault exists in the vehicle-mounted lidar, the real-time vehicle-side calibration may be performed first on the extrinsic parameter of the vehicle-mounted lidar based on the real-time point cloud data collected by the vehicle-mounted lidar and the real-time image data collected by the vehicle-mounted camera. When the real-time vehicle-side calibration is successfully performed on the extrinsic parameter, the repair of the second type of fault is completed. When the real-time vehicle-side calibration is not successfully performed on the extrinsic parameter, it is possible to determine the number of real-time vehicle-side calibrations. If the number is less than or equal to the preset number threshold, it is possible to continue to attempt to perform the real-time vehicle-side calibration on the extrinsic parameter. If the number is greater than the number threshold, it is possible for the cloud server, which is communicatively connected to the vehicle, to issue an updated calibration file to the vehicle to complete the repair of the second type of fault. That is to say, since the vehicle has a long link with the cloud server and needs to consume traffic charges to communicate with the cloud server, when the second type of fault is detected in the vehicle-mounted lidar, it is possible to first attempt to perform, on the vehicle side, the real-time vehicle-side calibration on the extrinsic parameter of the vehicle-mounted lidar. After multiple unsuccessful attempts, an updated calibration file may be issued by the cloud server to update the intrinsic and extrinsic parameters of the vehicle-mounted lidar. Those skilled in the art may set the value of the number threshold based on requirements of a practical application.

In an implementation, it is possible to realize the real-time vehicle-side calibration by using a preset model and by using the real-time point cloud data and the real-time image data collected by the vehicle-mounted lidar and the vehicle-mounted camera for the same target in the same target collection region.

In an implementation, if the second type of fault cannot be repaired after the cloud server issues an updated calibration file, the driver or related personnel will be notified to perform off-line maintenance on the vehicle-mounted lidar.

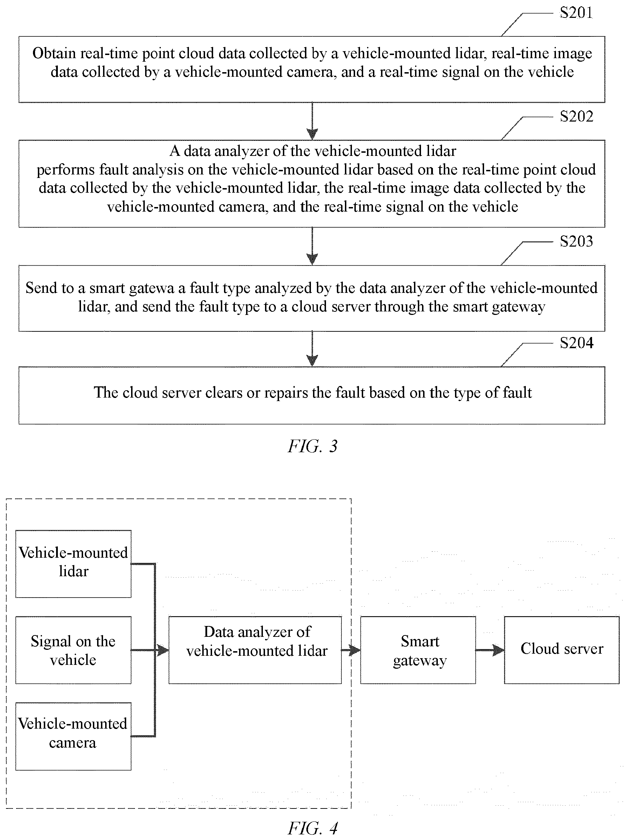

In an implementation, reference can be made to FIGS. 3 and 4. FIG. 3 is a schematic flowchart of main steps of a fault diagnosis and handling method for a vehicle-mounted lidar according to an implementation of the embodiments of the disclosure; and FIG. 4 is a block diagram of a main system structure of a system for implementing a fault diagnosis and handling method for a vehicle-mounted lidar according to an implementation of the embodiments of the disclosure.

As shown in FIGS. 3 and 4, in this implementation, the fault diagnosis and handling method for a vehicle-mounted lidar may include the following steps.

In step S201, real-time point cloud data collected by the vehicle-mounted lidar, real-time image data collected by a vehicle-mounted camera, and a real-time vehicle-side signal are obtained.

In step S202, a data analyzer of the vehicle-mounted lidar performs fault analysis on the vehicle-mounted lidar based on the real-time point cloud data collected by the vehicle-mounted lidar, the real-time image data collected by the vehicle-mounted camera, and the real-time vehicle-side signal.

In this implementation, it is possible to perform the fault analysis on the vehicle-mounted lidar based on the real-time point cloud data collected by the vehicle-mounted lidar, the real-time image data collected by the vehicle-mounted camera, and the real-time vehicle-side signal, so as to obtain a fault type of the vehicle-mounted lidar, such as a first type of fault and a second type of fault.

In step S203, the type of fault analyzed by the data analyzer of the vehicle-mounted lidar is sent to a smart gateway, and the fault type is sent to a cloud server through the smart gateway.

In step S204, the cloud server clears or repairs the fault based on the fault type.

In this implementation, it is possible for the cloud server to clear or repair the fault based on the fault type. If the fault type is the first type of fault, the cloud server may publish fault alarm information to notify related personnel to repair the vehicle-mounted lidar. If the fault type is the second type of fault, the cloud server may issue an updated calibration file such that the vehicle-mounted lidar obtains accurate intrinsic and extrinsic parameters.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by a processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes a processor and a storage. The storage may be configured to store a program for executing the fault diagnosis and handling method for a vehicle-mounted lidar in the above method embodiments. The processor may be configured to execute a program in the storage that includes, but is not limited to, the program for executing the fault diagnosis and handling method for a vehicle-mounted lidar in the above method embodiments. For ease of description, only parts related to the embodiments of the disclosure are shown. For specific technical details that are not disclosed, reference may be made to the method part of the embodiments of the disclosure. The control apparatus may be a control apparatus formed by various electronic devices.

Further, the disclosure further provides a computer-readable storage medium. In an embodiment of the computer-readable storage medium according to the disclosure, the computer-readable storage medium may be configured to store a program for executing the fault diagnosis and handling method for a vehicle-mounted lidar in the above method embodiments. The program may be loaded and run by a processor to perform the fault diagnosis and handling method for a vehicle-mounted lidar described above. For ease of description, only parts related to the embodiments of the disclosure are shown. For specific technical details that are not disclosed, reference may be made to the method part of the embodiments of the disclosure. The computer-readable storage medium may be a storage formed by various electronic devices. Optionally, the computer-readable storage medium in the embodiment of the disclosure is a non-transitory computer-readable storage medium.

Further, the disclosure further provides a vehicle. In an embodiment of the vehicle according to the disclosure, the vehicle may include the control apparatus in the foregoing embodiment of the control apparatus.

Further, it should be understood that, because the configuration of modules is merely intended to illustrate function units of the apparatus in the disclosure, physical devices corresponding to these modules may be a processor itself, or part of software, part of hardware, or part of a combination of software and hardware in the processor. Therefore, the number of modules in the figure is merely schematic.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations.

## Claims

1. A computer implemented fault diagnosis and handling method for a vehicle-mounted lidar, **characterized in that** the method comprises:
comparing (S101) real-time point cloud data of a first preset target that is collected by the vehicle-mounted lidar with standard point cloud data pre-stored for the first preset target, which comprises comparing the real-time point cloud data with the standard point cloud data to obtain a similarity between the real-time point cloud data and the standard point cloud data;
determining (S102) whether a first type of fault exists in the vehicle-mounted lidar based on the comparison result, which comprises determining that the first type of fault exists in the vehicle-mounted lidar when the similarity is less than a preset similarity threshold;
obtaining (S103) the real-time scenario of the vehicle; and
determining (S104) whether, if the first type of fault exists, to handle the first type of fault based on the real-time scenario of the vehicle,
wherein the determining (S104) of whether, if the first type of fault exists, to handle the first type of fault based on the real-time scenario of the vehicle comprises:
determining whether the real-time scenario of the vehicle is a preset scenario, wherein the preset scenario is a scenario where point cloud data is missing due to environmental factors;
sending fault alarm information to a vehicle-mounted device if it is determined that the real-time scenario of the vehicle is not the preset scenario; and
performing no further handling if it is determined that the real-time scenario of the vehicle is the preset scenario.

2. The method according to claim 1, wherein the determining of whether, if the first type of fault exists, to handle the first type of fault based on the real-time scenario of the vehicle comprises:
determining whether the real-time scenario of the vehicle is a preset scenario, wherein the preset scenario is a scenario where point cloud data is missing due to environmental factors;
determining a fault duration of the first type of fault if it is determined that the real-time scenario of the vehicle is not the preset scenario;
sending fault alarm information to a vehicle-mounted device if the fault duration exceeds a preset duration threshold;
performing no further handling if the fault duration does not exceed the preset duration threshold; and
performing no further handling if it is determined that the real-time scenario of the vehicle is the preset scenario.

3. The method according to any of claims 1 to 2, wherein the obtaining of the real-time scenario of the vehicle comprises:
performing a real-time fusion on a real-time signal of the vehicle and real-time image data collected by a vehicle-mounted camera; and
obtaining the real-time scenario of the vehicle based on the real-time fusion result.

4. The method according to claim 3, wherein the real-time vehicle-side signal comprises at least one of a Controller Area Network, CAN, signal, an Real-time kinematic, RTK, signal and an Inertial Measurement Unit, IMU, signal on the vehicle side.

5. The method according to any of claims 1 to 4, further comprising:
obtaining (S105) real-time point cloud data and real-time image data of a second preset target that are collected by the vehicle-mounted lidar and a vehicle-mounted camera respectively;
determining (S106) whether a second type of fault exists in the vehicle-mounted lidar by comparing the real-time point cloud data and the real-time image data; and
repairing (S107) the second type of fault if it is determined that the second type of fault exists in the vehicle-mounted lidar.

6. The method according to claim 5, wherein the determining of whether a second type of fault exists in the vehicle-mounted lidar by comparing the real-time point cloud data and the real-time image data comprises:
obtaining first position information of the second preset target based on the real-time point cloud data;
obtaining second position information of the second preset target based on the real-time image data;
comparing the first position information with the second position information based on an extrinsic parameter between the vehicle-mounted lidar and the vehicle-mounted camera, to obtain a positional deviation between the first position information and the second position information; and
determining that the second type of fault exists in the vehicle-mounted lidar if the positional deviation is greater than a preset deviation threshold.

7. The method according to claim 5 or 6, wherein the repairing of the second type of fault if it is determined that the second type of fault exists in the vehicle-mounted lidar comprises:
step S1: performing a real-time vehicle-side calibration on an extrinsic parameter between the vehicle-mounted lidar and the vehicle-mounted camera based on the real-time point cloud data and the real-time image data;
step S2: determining whether the real-time vehicle-side calibration is successfully performed on the extrinsic parameter; and if yes, proceeding to step S3; otherwise, proceeding to step S4;
step S3: completing the repair of the second type of fault;
step S4: determining whether the number of real-time vehicle-side calibrations is greater than a preset number threshold; and if yes, proceeding to step S5; otherwise, proceeding to step S1; and
step S5: controlling a cloud server, which is communicatively connected to the vehicle, to issue an updated calibration file to the vehicle to complete the repair of the second type of fault, wherein the updated calibration file comprises an accurate intrinsic parameter of the vehicle-mounted lidar and an accurate extrinsic parameter between the vehicle-mounted lidar and the vehicle-mounted camera.

8. A control apparatus, comprising at least one processor and a storage configured to store a plurality of program codes, **characterized in that** the program codes are adapted to be loaded and executed by the at least one processor to perform the fault diagnosis and handling method for a vehicle-mounted lidar of any one of claims 1 to 7.

9. A non-transitory computer-readable storage medium having a plurality of program codes stored thereon, **characterized in that** the program codes, when executed by at least one processor, cause the at least one processor to perform the fault diagnosis and handling method for a vehicle-mounted lidar of any one of solutions 1 to 8.

10. A vehicle, **characterized by** including the control apparatus according to claim 8.

## Patentansprüche

1. Computerimplementiertes Fehlerdiagnose- und Fehlerbehandlungsverfahren für ein fahrzeugmontiertes Lidar, **dadurch gekennzeichnet, dass** das Verfahren umfasst:
Vergleichen (S101) von Echtzeit-Punktwolkendaten eines ersten voreingestellten Ziels, die durch das fahrzeugmontierte Lidar erfasst werden, mit für das erste voreingestellte Ziel vorab gespeicherten Standard-Punktwolkendaten, was das Vergleichen der Echtzeit-Punktwolkendaten mit den Standard-Punktwolkendaten zum Erhalten einer Ähnlichkeit zwischen den Echtzeit-Punktwolkendaten und den Standard-Punktwolkendaten umfasst;
Bestimmen (S102), ob ein Fehler eines ersten Typs in dem fahrzeugmontierten Lidar vorliegt, basierend auf dem Vergleichsergebnis, was das Bestimmen umfasst, dass der Fehler des ersten Typs in dem fahrzeugmontierten Lidar vorliegt, wenn die Ähnlichkeit kleiner als ein voreingestellter Ähnlichkeitsschwellenwert ist;
Erhalten (S103) des Echtzeitszenarios des Fahrzeugs; und
Bestimmen (S104), ob, falls der Fehler des ersten Typs vorliegt, der Fehler des ersten Typs basierend auf dem Echtzeitszenario des Fahrzeugs behandelt werden soll,
wobei das Bestimmen (S104), ob, falls der Fehler des ersten Typs vorliegt, der Fehler des ersten Typs basierend auf dem Echtzeitszenario des Fahrzeugs behandelt werden soll, umfasst:
Bestimmen, ob das Echtzeitszenario des Fahrzeugs ein voreingestelltes Szenario ist, wobei das voreingestellte Szenario ein Szenario ist, bei dem Punktwolkendaten aufgrund von Umweltfaktoren fehlen;
Senden von Fehleralarminformationen an eine fahrzeugmontierte Vorrichtung, wenn bestimmt wird, dass das Echtzeitszenario des Fahrzeugs nicht das voreingestellte Szenario ist; und
Durchführen keiner weiteren Behandlung, wenn bestimmt wird, dass das Echtzeitszenario des Fahrzeugs das voreingestellte Szenario ist.

2. Verfahren nach Anspruch 1, wobei das Bestimmen, ob, falls der Fehler des ersten Typs vorliegt, der Fehler des ersten Typs basierend auf dem Echtzeitszenario des Fahrzeugs behandelt werden soll, umfasst:
Bestimmen, ob das Echtzeitszenario des Fahrzeugs ein voreingestelltes Szenario ist, wobei das voreingestellte Szenario ein Szenario ist, bei dem Punktwolkendaten aufgrund von Umweltfaktoren fehlen;
Bestimmen einer Fehlerdauer des ersten Fehlertyps, wenn bestimmt wird, dass das Echtzeitszenario des Fahrzeugs nicht das voreingestellte Szenario ist;
Senden von Fehleralarminformationen an eine fahrzeugmontierte Vorrichtung, wenn die Fehlerdauer einen voreingestellten Dauerschwellenwert überschreitet;
Durchführen keiner weiteren Behandlung, wenn die Fehlerdauer den voreingestellten Dauerschwellenwert nicht überschreitet; und
Durchführen keiner weiteren Behandlung, wenn bestimmt wird, dass das Echtzeitszenario des Fahrzeugs das voreingestellte Szenario ist.

3. Verfahren nach einem der Ansprüche 1 bis 2, wobei das Erhalten des Echtzeitszenarios des Fahrzeugs umfasst:
Durchführen einer Echtzeitfusion eines Echtzeitsignals des Fahrzeugs und von durch eine fahrzeugmontierte Kamera erfassten Echtzeit-Bilddaten; und
Erhalten des Echtzeitszenarios des Fahrzeugs basierend auf dem Echtzeitfusionsergebnis.

4. Verfahren nach Anspruch 3, wobei das fahrzeugseitige Echtzeitsignal mindestens eines von einem Controller Area Network-, CAN-, Signal, einem Echtzeit-Kinematik-, RTK-, Signal und einem Signal der Inertial-Messeinheit, IMU, auf der Fahrzeugseite umfasst.

5. Verfahren nach einem der Ansprüche 1 bis 4, ferner umfassend:
Erhalten (S105) von Echtzeit-Punktwolkendaten und Echtzeit-Bilddaten eines zweiten voreingestellten Ziels, die jeweils durch das fahrzeugmontierte Lidar bzw. eine fahrzeugmontierte Kamera erfasst werden;
Bestimmen (S106), ob ein Fehler eines zweiten Typs in dem fahrzeugmontierten Lidar vorliegt, durch Vergleichen der Echtzeit-Punktwolkendaten und der Echtzeit-Bilddaten; und
Reparieren (S107) der zweiten Fehlerart, wenn bestimmt wird, dass die zweite Fehlerart im fahrzeugmontierten Lidar vorliegt.

6. Verfahren nach Anspruch 5, wobei das Bestimmen, ob ein Fehler eines zweiten Typs in dem fahrzeugmontierten Lidar durch Vergleichen der Echtzeit-Punktwolkendaten und der Echtzeit-Bilddaten vorliegt, umfasst:
Erhalten erster Positionsinformationen des zweiten voreingestellten Ziels basierend auf den Echtzeit-Punktwolkendaten;
Erhalten zweiter Positionsinformationen des zweiten voreingestellten Ziels basierend auf den Echtzeit-Bilddaten;
Vergleichen der ersten Positionsinformationen mit den zweiten Positionsinformationen basierend auf einem extrinsischen Parameter zwischen dem fahrzeugmontierten Lidar und der fahrzeugmontierten Kamera, um eine Positionsabweichung zwischen den ersten Positionsinformationen und den zweiten Positionsinformationen zu erhalten; und
Bestimmen, dass der Fehler des zweiten Typs in dem fahrzeugmontierten Lidar vorliegt, wenn die Positionsabweichung größer als ein voreingestellter Abweichungsschwellenwert ist.

7. Verfahren nach Anspruch 5 oder 6, wobei das Reparieren des Fehlers des zweiten Typs, wenn bestimmt wird, dass der Fehler des zweiten Typs in dem fahrzeugmontierten Lidar vorliegt, umfasst:
Schritt S1: Durchführen einer fahrzeugseitigen Echtzeitkalibrierung an einem extrinsischen Parameter zwischen dem fahrzeugseitigen Lidar und der fahrzeugseitigen Kamera basierend auf den Echtzeit-Punktwolkendaten und den Echtzeit-Bilddaten;
Schritt S2: Bestimmen, ob die fahrzeugseitige Echtzeitkalibrierung erfolgreich an dem extrinsischen Parameter durchgeführt wird; und wenn ja, Fortfahren mit Schritt S3; andernfalls Fortfahren mit Schritt S4;
Schritt S3: Abschließen der Reparatur des Fehlers des zweiten Typs;
Schritt S4: Bestimmen, ob die Anzahl fahrzeugseitiger Echtzeitkalibrierungen größer als ein voreingestellter Anzahlschwellenwert ist; und falls ja, Fortfahren mit Schritt S5; andernfalls Fortfahren mit Schritt S1; und
Schritt S5: Steuern eines Cloud-Servers, der kommunikativ mit dem Fahrzeug verbunden ist, zum Ausgeben einer aktualisierten Kalibrierdatei an das Fahrzeug, um die Reparatur des Fehlers des zweiten Typs abzuschließen, wobei die aktualisierte Kalibrierdatei einen genauen intrinsischen Parameter des fahrzeugmontierten Lidars und einen genauen extrinsischen Parameter zwischen dem fahrzeugmontierten Lidar und der fahrzeugmontierten Kamera umfasst.

8. Steuervorrichtung, umfassend mindestens einen Prozessor und einen Speicher, der ausgelegt ist, eine Mehrzahl von Programmcodes zu speichern, **dadurch gekennzeichnet, dass** die Programmcodes dazu ausgelegt sind, durch den mindestens einen Prozessor geladen und ausgeführt zu werden, um das Fehlerdiagnose- und Fehlerbehandlungsverfahren für ein fahrzeugmontiertes Lidar nach einem der Ansprüche 1 bis 7 durchzuführen.

9. Nichtflüchtiges computerlesbares Speichermedium, auf dem eine Mehrzahl von Programmcodes gespeichert ist, **dadurch gekennzeichnet, dass** die Programmcodes, wenn sie durch mindestens einen Prozessor ausgeführt werden, den mindestens einen Prozessor veranlassen, das Fehlerdiagnose- und Fehlerbehandlungsverfahren für ein fahrzeugmontiertes Lidar nach einer der Lösungen 1 bis 8 durchzuführen.

10. Fahrzeug, **dadurch gekennzeichnet, dass** es die Steuervorrichtung nach Anspruch 8 umfasst.

## Revendications

1. Procédé mis en œuvre par ordinateur de diagnostic et de traitement de défaillance pour un lidar monté sur véhicule, **caractérisé en ce que** le procédé comprend les faits :
de comparer (S101) des données de nuage de points en temps réel d'une première cible prédéfinie qui sont collectées par le lidar monté sur véhicule à des données de nuage de points standard préstockées pour la première cible prédéfinie, qui comprend le fait de comparer les données de nuage de points en temps réel aux données de nuage de points standard pour obtenir une similarité entre les données de nuage de points en temps réel et les données de nuage de points standard ;
de déterminer (S102) si un premier type de défaillance existe dans le lidar monté sur véhicule sur la base du résultat de comparaison, qui comprend la fait de déterminer que le premier type de défaillance existe dans le lidar monté sur véhicule lorsque la similarité est inférieure à un seuil de similarité prédéfini ;
d'obtenir (S103) le scénario en temps réel du véhicule ; et
de déterminer (S104) s'il faut, au cas où le premier type de défaillance existerait, traiter le premier type de défaillance sur la base du scénario en temps réel du véhicule,
dans lequel le fait de déterminer (S104) s'il faut, au cas où le premier type de défaillance existerait, traiter le premier type de défaillance sur la base du scénario en temps réel du véhicule comprend les faits :
de déterminer si le scénario en temps réel du véhicule est un scénario prédéfini, dans lequel le scénario prédéfini est un scénario où des données de nuage de points sont manquantes en raison de facteurs environnementaux ;
d'envoyer des informations d'alarme de défaillance à un dispositif monté sur véhicule s'il est déterminé que le scénario en temps réel du véhicule n'est pas le scénario prédéfini ; et
de ne réaliser aucun traitement supplémentaire s'il est déterminé que le scénario en temps réel du véhicule est le scénario prédéfini.

2. Procédé selon la revendication 1, dans lequel le fait de déterminer s'il faut, au cas où le premier type de défaillance existerait, traiter le premier type de défaillance sur la base du scénario en temps réel du véhicule comprend les faits :
de déterminer si le scénario en temps réel du véhicule est un scénario prédéfini, dans lequel le scénario prédéfini est un scénario où des données de nuage de points sont manquantes en raison de facteurs environnementaux ;
de déterminer une durée de défaillance du premier type de défaillance s'il est déterminé que le scénario en temps réel du véhicule n'est pas le scénario prédéfini ;
d'envoyer des informations d'alarme de défaillance à un dispositif monté sur véhicule si la durée de défaillance dépasse un seuil de durée prédéfini ;
de ne réaliser aucun traitement supplémentaire si la durée de défaillance ne dépasse pas le seuil de durée prédéfini ; et
de ne réaliser aucun traitement supplémentaire s'il est déterminé que le scénario en temps réel du véhicule est le scénario prédéfini.

3. Procédé selon de quelconques des revendications 1 et 2, dans lequel le fait d'obtenir du scénario en temps réel du véhicule comprend les faits :
de réaliser un fusion en temps réel sur un signal en temps réel du véhicule et des données d'image en temps réel collectées par une caméra montée sur véhicule ; et
d'obtenir le scénario en temps réel du véhicule sur la base du résultat de fusion en temps réel.

4. Procédé selon la revendication 3, dans lequel le signal côté véhicule en temps réel comprend au moins un signal parmi un signal CAN, Controller Area Network, un signal RTK, Real-Time Kinematic, et un signal IMU, Inertial Measurement Unit, sur le côté véhicule.

5. Procédé selon de quelconques des revendications 1 à 4, comprenant en outre les faits :
d'obtenir (S105) des données de nuage de points en temps réel et des données d'image en temps réel d'une seconde cible prédéfinie qui sont collectées par le lidar monté sur véhicule et une caméra montée sur véhicule, respectivement ;
de déterminer (S106) si un second type de défaillance existe dans le lidar monté sur véhicule en comparant les données de nuage de points en temps réel et les données d'image en temps réel ; et
de réparer (S107) le second type de défaillance s'il est déterminé que le second type de défaillance existe dans le lidar monté sur véhicule.

6. Procédé selon la revendication 5, dans lequel le fait de déterminer si un second type de défaillance existe dans le lidar monté sur véhicule en comparant les données de nuage de points en temps réel et les données d'image en temps réel comprend les faits :
d'obtenir des premières informations de position de la seconde cible prédéfinie sur la base des données de nuage de points en temps réel ;
d'obtenir des secondes informations de position de la seconde cible prédéfinie sur la base des données d'image en temps réel ;
de comparer les premières informations de position aux secondes informations de position sur la base d'un paramètre extrinsèque entre le lidar monté sur véhicule et la caméra montée sur véhicule, pour obtenir un écart positionnel entre les premières informations de position et les secondes informations de position ; et
de déterminer que le second type de défaillance existe dans le lidar monté sur véhicule si l'écart positionnel est supérieur à un seul d'écart prédéfini.

7. Procédé selon la revendication 5 ou 6, dans lequel le fait de réparer le second type de défaillance s'il est déterminé que le second type de défaillance existe dans le lidar monté sur véhicule comprend :
l'étape S1 : de réaliser un calibrage côté véhicule en temps réel sur un paramètre extrinsèque entre le lidar monté sur véhicule et la caméra montée sur véhicule sur la base des données de nuage de points en temps réel et des données d'image en temps réel ;
l'étape S2 : de déterminer si le calibrage côté véhicule en temps réel est réalisé avec succès sur le paramètre extrinsèque ; et si oui, de passer à l'étape S3 ; autrement, de passer à l'étape S4 ;
l'étape S3 : d'achever la réparation du second type de défaillance ;
l'étape S4 : de déterminer si le nombre de calibrages côté véhicule en temps réel est supérieur à un seuil de nombre prédéfini ; et si oui, de passer à l'étape S5 ; autrement, de passer à l'étape S1 ; et
l'étape S5 : de commander un serveur en nuage, qui est connecté en communication au véhicule, pour émettre un fichier de calibrage mis à jour au véhicule pour achever la réparation du second type de défaillance, dans lequel le fichier de calibrage mis à jour comprend un paramètre intrinsèque précis du lidar monté sur véhicule et un paramètre extrinsèque précis entre le lidar monté sur véhicule et la caméra montée sur véhicule.

8. Appareil de commande, comprenant au moins un processeur et un composant de stockage configuré pour stocker une pluralité de codes de programme, **caractérisé en ce que** les codes de programme sont adaptés pour être chargés et exécutés par l'au moins un processeur pour réaliser le procédé de diagnostic et de traitement de défaillance pour un lidar monté sur véhicule de l'une quelconque des revendications 1 à 7.

9. Support de stockage non transitoire lisible par ordinateur ayant une pluralité de codes de programme stockés sur celui-ci, **caractérisé en ce que** les codes de programme, lorsqu'ils sont exécutés par au moins un processeur, amènent l'au moins un processeur à réaliser le procédé de diagnostic et de traitement de défaillance pour un lidar monté sur véhicule de l'une quelconque des solutions 1 à 8.

10. Véhicule, **caractérisé en ce qu'**il inclut l'appareil de commande selon la revendication 8.
